# EUROPEAN PATENT APPLICATION

(11) **EP 2 720 514 A1**
(43) Date of publication of application: **16.04.2014**
(21) Application number: 12188297.1
(22) Date of filing: 12.10.2012
(51) Int. Cl.: H05B 37/02, H05B 39/04, H05B 41/40

(54) **Voltage regulator apparatus and power conditioning apparatus incorporating such voltage regulator apparatus**

(71) Applicant: Tofco CPP Limited, Ponteland Northumberland NE20 9SD (GB)
(72) Inventor: The designation of the inventor has not yet been filed
(74) Representative: Vinsome, Rex Martin

(57) **Abstract**

A voltage regulator apparatus (14) is disclosed. The apparatus comprises a supply terminal (36) adapted to receive electrical power from a power supply and an output terminal (50) adapted to supply electrical power to a load. A transformer (28) has primary windings (30) and secondary windings (32, 34). Relays (442, 44, 46, 48) selectively connect each secondary winding to the output terminal.

## Description

The present invention relates to a voltage regulator apparatus and to a power conditioning apparatus incorporating such a voltage regulator apparatus. The invention relates particularly, but not exclusively, to a voltage regulator apparatus and a power conditioning apparatus for supplying electrical power to street lights.

Street lights are generally wired in a configuration in which they are fed with power from a feeder pillar from one end. As each light draws current, a voltage drop develops in each segment of the feeder cable, resulting in an accumulated voltage drop at the end of the cable. This accumulated voltage drop gives rise to low supply voltage which can cause the lights to fail to operate correctly. In addition, many street lights are of the gas-discharge type, which require a larger current at start up than when running in their normal operating condition, and the voltage drop is largest at switch on of the lights. Switch on current is typically up to four times the rated running current and reduces with time until the lights reach their normal working temperature.

This problem is exacerbated because the lights in the circuit often switch on at the same time, since they are often all controlled by a single photocell at the feeder pillar. As a result, in order to cope with the elevated switch on current of all of the lights switching on at the same time, and in order to minimise voltage drops, heavier cable and connection systems are required. This increases the cost and power consumption of the street lights. For example, a 1000m string of 25 250W SON (high pressure sodium) lamps typically draws a total of 28A. However at start up, the required current is approximately 100A, and 35mm² cable is required to supply this load.

Preferred embodiments of the present invention seek to overcome one or more of the above disadvantages of the prior art.

According to an aspect of the present invention, there is provided a voltage regulator apparatus comprising:-
an input portion adapted to receive electrical power from a power supply;
an output portion adapted to supply electrical power to at least one load;
transformer means having at least one primary winding adapted to receive electrical current from said power supply and at least one secondary winding adapted to generate an electrical voltage as a result of flow of electrical current in at least one said primary winding; and
switching means for selectively connecting at least one said secondary winding to said output portion.

By providing transformer means and switching means for selectively connecting at least one secondary winding of the transformer means to the output portion, this provides the advantage of enabling the voltage supplied to loads such as street lights to be easily regulated. This in turn enables the loads to be more easily maintained within their desired operating voltage ranges, thereby avoiding overvoltages, which may cause damage to equipment connected to the voltage regulator apparatus. In addition, in the case of street lights, the voltage regulator apparatus enables a voltage boost facility, which in turn allows smaller diameter cable to be used. This in turn reduces the power consumption and cost of apparatus incorporating the voltage regulator apparatus.

The switching means may be adapted to select the polarity of connection of at least one said secondary winding to said output portion.

This provides the advantage of increasing the flexibility of use of the apparatus, by enabling the secondary winding to be connected predominately in phase or predominately in antiphase to the supply voltage.

The switching means may comprise at least one relay.

The switching means may be adapted to disconnect each said secondary winding from said output portion.

This provides the advantage of minimising the risk of damage to the voltage regulator apparatus and apparatus connected to the voltage regulator apparatus in the event of malfunction of the voltage regulator apparatus.

The switching means may be adapted to disconnect at least one said secondary winding from said output portion in response to an input signal from a temperature sensor.

This provides the advantage of enabling the transformer means to be bypassed in the event that it malfunctions.

The apparatus may further comprise control means for controlling the switching means.

The control means may be adapted to receive input signals from at least one voltage sensor and/or at least one current sensor.

According to another aspect of the present invention, there is provided a power conditioning apparatus for receiving electrical power from a power supply and supplying electrical power to a plurality of loads, the power conditioning apparatus comprising timer means for supplying electrical power to a plurality of said loads from a plurality of starting times.

By providing timer means for supplying electrical power to a plurality of loads from a plurality of starting times, this provides the advantage of reducing the total start up current of the loads connected to the power conditioning apparatus, thereby enabling smaller diameter cable to be used, which decreases the cost and power consumption of apparatus connected to the power conditioning apparatus. In addition, in the case of street lights, this provides the advantage of reducing overvoltages, which in turn increases the lifetime of lamps incorporating the power conditioning apparatus.

The timer means may be adapted to supply electrical power to a plurality of said loads at predetermined starting times.

The power conditioning apparatus may further comprise pseudorandom number generating means for determining a plurality of said starting times.

This provides the advantage of minimising the extent to which voltage drops and overvoltages repeatedly occur in the same loads.

The apparatus may further comprise low pass filter means for filtering voltage supplied to at least one said load.

This provides the advantage of removing harmonic and transient signals, which in turn reduces potential damage to apparatus connected to the power conditioning apparatus and improves the efficiency of operation of the apparatus.

The apparatus may further comprise voltage regulator means for regulating voltage supplied to at least one said load.

The voltage regulator means may comprise at least one voltage regulator apparatus as defined above.

The apparatus may further comprise at least one voltage sensor and/or at least one current sensor and/or at least one temperature sensor.

According to a further aspect of the present invention, there is provided a street lighting apparatus including at least one voltage regulator apparatus as defined above and/or at least one power conditioning apparatus as defined above.

A preferred embodiment of the invention will now be described, by way of example only, and not in any limitative sense, with reference to the accompanying drawings, in which:-
Figure 1 shows a schematic diagram of a power conditioning apparatus embodying the present invention for use with street lights; and
Figure 2 is a circuit diagram of a voltage regulator apparatus of the power conditioning apparatus of Figure 1.

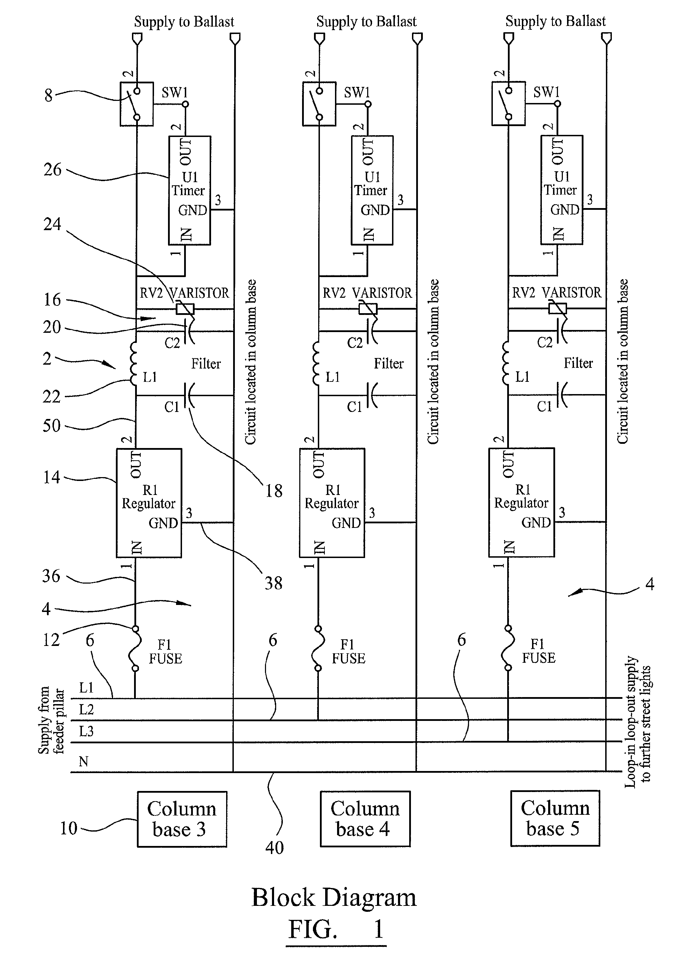

Referring to Figure 1, a power conditioning apparatus 2 embodying the present invention for supplying electrical power to street lights (not shown) receives electrical power from the grid via a feeder pillar. The apparatus 2 comprises a plurality of lighting circuits 4, each of which receives electrical power from the grid via alternate phases 6. The lighting circuits 4 are connected on alternate phases 6, and operate respective switches 8 to supply electrical power to lamps (not shown).

When the electrical supply to the power conditioning apparatus 2 is switched on by the feeder pillar, voltage is applied to all column bases 10 at the same time. The supply voltage, which may be from 190V to 270V, is applied to a protection fuse 12 in each column and to a voltage regulator apparatus 14, the operation of which will be described in further detail below. The voltage regulator apparatus 14 automatically selects a reduction or boost voltage ratio in dependence on the level of the incoming voltage, to deliver an output voltage of 230V +/- 6.6V. In an alternative embodiment, the voltage regulator apparatus 14 selects a 20V fixed ratio boost or reduction.

The output voltage of each voltage regulator apparatus 14 is applied to a low pass filter 16 comprising capacitors 18, 20, inductor 22 and varistor 24. The low pass filter 16 removes potentially damaging harmonics and transient voltages from the supply, and provides an output voltage to a respective timer circuit 26. When the supply voltage is applied, each timer circuit 26 starts and causes respective switch 8 to close after a predetermined time interval, determined by a pseudorandom number generator, or after a predetermined interval based on the serial number of the timer circuit 26. Closing of the switch 8 delivers power to control gear (not shown) and lights the lamps of the lighting apparatus. As a result, each street light column switches on at a different time, thereby minimising the peak start up current of the lighting apparatus as a whole.

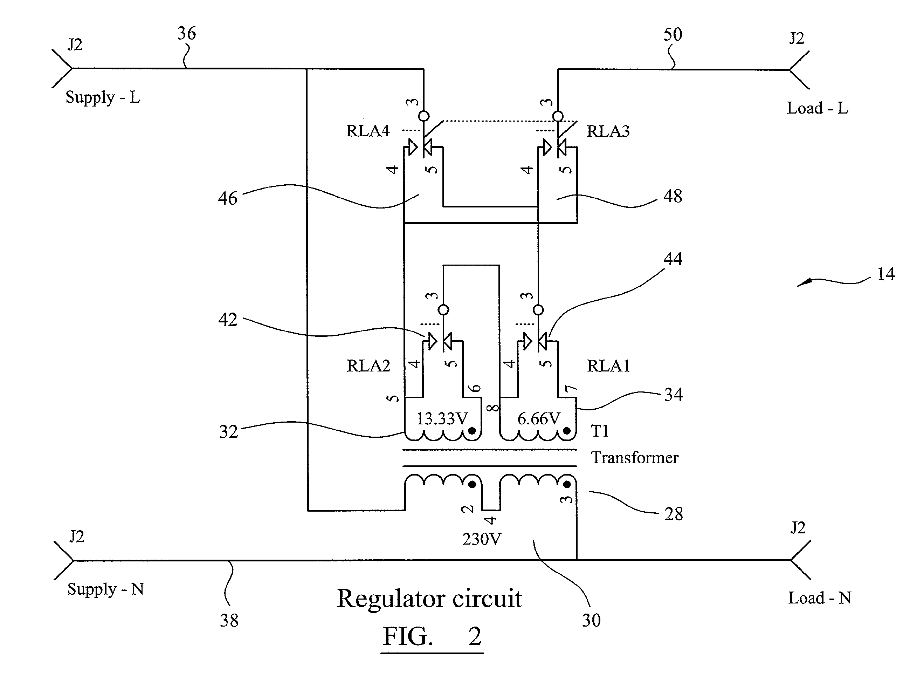

Referring to Figure 2, each voltage regulator apparatus 14 includes a transformer 28 having primary windings 30 and first 32 and second 34 secondary windings. The primary windings 30 are connected between a supply terminal 36 connected to the supply phase 6 and a neutral terminal 38 connected to neutral line 40. The first 32 and second 34 secondary windings are connected via respective first relays 42, 44 in series and via second relays 46, 48 between the supply terminal 36 and an output terminal 50 connected to low pass filter 16.

When the transformer 28 is connected to the main supply, current flow in the primary windings 30 generates outputs of approximately 13.33V in first secondary winding 32 and 6.66V in second secondary winding 34. By suitable control of the first relays 42, 44, each of, both of, or none of the secondary windings 32, 34 can be selectively connected in series between second relays 46, 48, and between the supply terminal 36 and the output terminal 50 by suitable control of the second relays 46, 48. As a result, voltages of 0V, 6.66V, 13.33V or 20V supplied by the secondary windings 32, 34 may be selected, and the secondary voltage may be connected predominately in phase or predominately in antiphase with the supply voltage, thereby increasing or reducing the load voltage supplied to the loads between output terminal 50 and neutral terminal 38. It is also possible to bypass the secondary windings 32, 34 by suitable switching of the second relays 46, 48 to connect the supply terminal 36 directly to the output terminal 50.

The voltage regulators 14 and timers 26 are controlled by a microcontroller (not shown) which receives input signals from voltage and current sensors (not shown) at supply and load points, as well a temperature sensor (not shown) in the transformer 28. In this way, the secondary windings 32, 34 can be bypassed to prevent damage in the event of an overload condition.

It will be appreciated by persons skilled in the art that the above embodiment has been described by way of example only and not in any limitative sense, and that various alterations and modifications are possible without departure from the scope of the invention as defined by the appended claims.

## Claims

1. A voltage regulator apparatus comprising:-
an input portion adapted to receive electrical power from a power supply;
an output portion adapted to supply electrical power to at least one load;
transformer means having at least one primary winding adapted to receive electrical current from said power supply and at least one secondary winding adapted to generate an electrical voltage as a result of flow of electrical current in at least one said primary winding; and
switching means for selectively connecting at least one said secondary winding to said output portion.

2. An apparatus according to claim 1, wherein the switching means is adapted to select the polarity of connection of at least one said secondary winding to said output portion.

3. An apparatus according to claim 1 or 2, wherein the switching means comprises at least one relay.

4. An apparatus according to any one of the preceding claims, wherein the switching means is adapted to disconnect each said secondary winding from said output portion.

5. An apparatus according to any one of the preceding claims, wherein the switching means is adapted to disconnect at least one said secondary winding from said output portion in response to an input signal from a temperature sensor.

6. An apparatus according to any one of the preceding claims, further comprising control means for controlling the switching means.

7. An apparatus according to claim 6, wherein the control means is adapted to receive input signals from at least one voltage sensor and/or at least one current sensor.

8. A power conditioning apparatus for receiving electrical power from a power supply and supplying electrical power to a plurality of loads, the power conditioning apparatus comprising timer means for supplying electrical power to a plurality of said loads from a plurality of starting times.

9. An apparatus according to claim 8, wherein the timer means is adapted to supply electrical power to a plurality of said loads at predetermined starting times.

10. An apparatus according to claim 8 or 9, further comprising pseudorandom number generating means for determining a plurality of said starting times.

11. An apparatus according to any one of claims 8 to 10, further comprising low pass filter means for filtering voltage supplied to at least one said load.

12. An apparatus according to any one of claims 8 to 11, further comprising voltage regulator means for regulating voltage supplied to at least one said load.

13. An apparatus according to claim 12, wherein the voltage regulator means comprises at least one voltage regulator apparatus according to any one of claims 1 to 7.

14. An apparatus according to any one of claims 8 to 13, further comprising at least one voltage sensor and/or at least one current sensor and/or at least one temperature sensor.

15. A street lighting apparatus including at least one voltage regulator apparatus according to any one of claims 1 to 7 and/or at least one power conditioning apparatus according to any one of claims 8 to 14.
